(19)

Europäisches
Patentamt
European
Patent Office
Office européen
des brevets

(11) **EP 3 054 505 A1**

(12) **EUROPEAN PATENT APPLICATION**
published in accordance with Art. 153(4) EPC

(43) Date of publication:
**10.08.2016 Bulletin 2016/32**

(21) Application number: **14850968.0**

(22) Date of filing: **11.09.2014**

(51) Int Cl.:
**H01M 4/48** (2006.01)        **H01M 4/36** (2006.01)
**H01M 4/38** (2006.01)

(86) International application number:
**PCT/JP2014/004681**

(87) International publication number:
**WO 2015/049836 (09.04.2015 Gazette 2015/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.10.2013  JP 2013208062**

(71) Applicant: **Shin-Etsu Chemical Co., Ltd.**
**Tokyo 100-0004 (JP)**

(72) Inventors:
• **YOSHIKAWA, Hiroki**
**Annaka-shi**
**Gunma 379-0224 (JP)**
• **KAMO, Hiromichi**
**Annaka-shi**
**Gunma 379-0224 (JP)**

(74) Representative: **Wibbelmann, Jobst**
**Wuesthoff & Wuesthoff**
**Patentanwälte PartG mbB**
**Schweigerstrasse 2**
**81541 München (DE)**

(54) **SILICON-CONTAINING MATERIAL, NEGATIVE ELECTRODE FOR NONAQUEOUS ELECTROLYTE SECONDARY BATTERY, NONAQUEOUS ELECTROLYTE SECONDARY BATTERY, AND MANUFACTURING METHOD THEREFOR**

(57)    The present invention provides a silicon-containing material capable of being doped with lithium and de-doped, wherein when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV. This provides a silicon-containing material which can produce a non-aqueous electrolyte secondary battery having good cycle performance.

[FIG. 1]

EP 3 054 505 A1

**Description**

TECHNICAL FIELD

The present invention relates to a silicon-containing material, and relates to a negative electrode for use in non-aqueous electrolyte secondary battery, and a non-aqueous electrolyte secondary battery, and methods of producing them.

BACKGROUND ART

As mobile devices such as mobile electronic devices and mobile communication devices have highly developed, secondary batteries with higher energy density are recently needed to improve efficiency and reduce the size and weight of the devices. The capacity of the secondary batteries of this type can be improved by known methods: use of a negative electrode material made of an oxide of V, Si, B, Zr or Sn, or a complex oxide thereof (See Patent Literatures 1 and 2, for example); use of a negative electrode material made of a metallic oxide subjected to melting and rapid cooling (See Patent Literature 3, for example); use of a negative electrode material made of a silicon oxide (See Patent Literature 4 for example); use of a negative electrode material made of $Si_2N_2O$ and $Ge_2N_2O$ (See Patent Literature 5 for example), and others.

Although these conventional methods increase the charging and discharging capacities and energy density to some extent, the increase is insufficient for market needs and the cycle performance fails to fulfill the needs. The conventional methods need to further improve the energy density and thus are not entirely satisfactory. In particular, Patent Literature 4 discloses use of a silicon oxide as a negative electrode material for a lithium-ion secondary battery so as to obtain an electrode with a high capacity. This method, however, cannot achieve low irreversible capacity at the first charge and discharge and a practical level of cycle performance; thus, there is room for improvement in this method.

Accordingly, as disclosed in Patent Literatures 6 and 7, improvements in first-cycle efficiency and cycle performance have been brought about. Secondary batteries, however, are required to have a lifetime of 10 years or more when used for electric vehicles, and accordingly have an important problem of an improvement in their cycle performance.

CITATION LIST

PATENT LITERATURE

Patent Literature 1: Japanese Unexamined Patent publication (Kokai) No. H05-174818
Patent Literature 2: Japanese Unexamined Patent publication (Kokai) No. H06-60867
Patent Literature 3: Japanese Unexamined Patent publication (Kokai) No. H10-294112
Patent Literature 4: Japanese Patent No. 2997741
Patent Literature 5: Japanese Unexamined Patent publication (Kokai) No. H11-102705
Patent Literature 6: Japanese Patent No. 3952180
Patent Literature 7: Japanese Patent No. 4081676

SUMMARY OF INVENTION

TECHNICAL PROBLEM

The present invention was accomplished in view of the above-described circumstances. It is an object of the present invention to provide a silicon-containing material that enables production of a non-aqueous electrolyte secondary battery having high cycle performance. It is another object of the present invention to provide a negative electrode for use in non-aqueous electrolyte secondary battery and a non-aqueous electrolyte secondary battery that use the silicon-containing material, and a method of producing these.

SOLUTION TO PROBLEM

To solve the above problems, the present invention provides a silicon-containing material capable of being doped with lithium and de-doped, wherein when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV.

The silicon-containing material satisfying such a requirement of discharging capacity can provide good cycle performance when used as a negative electrode of a non-aqueous electrolyte secondary battery.

The silicon-containing material of this invention is preferably a silicon composite configured such that silicon fine crystals or silicon fine particles are dispersed in a substance having a different composition from a composition of the silicon fine crystals or the silicon fine particles. In this case, the substance having the different composition from the composition of the silicon fine crystals or the silicon fine particles is more preferably a silicon-based compound. Moreover, the silicon-containing material is particularly preferred to be a silicon oxide represented by a general formula of $SiO_x$ (where $0.9 \leq x < 1.6$) and a disproportionation product of the silicon oxide.

These materials can provide higher capacity when used as a silicon-containing material.

The surface of the silicon-containing material preferably includes a conductive coating. In this case, the conductive coating is preferably mainly made of carbon.

The silicon-containing material whose surface is coated with the conductive coating, especially coated with the coating containing carbon, can improve an ability to collect current.

In this case, it is preferable for the silicon-containing material coated with a coating of a conductive material to comprise secondary particles wherein particles of the silicon-containing material are mixed with the conductive material.

When the silicon-containing material coated with a coating of a conductive material contains the secondary particles wherein particles of the silicon-containing material are mixed with the conductive material (composite particles of particles of the silicon-containing material and the conductive material) like the foregoing, the particles of the silicon-containing material improve their ability to collect current between the particles, and therefore gives good charge/discharge property.

The silicon-containing material preferably contains lithium.

The silicon-containing material being doped with lithium can reduce the initial irreversible capacity when the silicon-containing material is used as a negative electrode.

The present invention also provides a negative electrode for use in a non-aqueous electrolyte secondary battery, including any one of the foregoing silicon-containing material used as a negative electrode active material.

The present invention also provides a negative electrode for use in a non-aqueous electrolyte secondary battery, including any one of the foregoing silicon-containing material and carbon used as a negative electrode active material.

The negative electrode using these inventive silicon-containing materials as an active material allows a negative electrode for use in a non-aqueous electrolyte secondary battery to have good cycle performance.

The present invention also provides a non-aqueous electrolyte secondary battery, including a negative electrode and a positive electrode that are capable of occluding and emitting lithium ions and an electrolyte having lithium ionic conductivity, wherein the negative electrode is any one of the foregoing negative electrode for use in a non-aqueous electrolyte secondary battery.

A non-aqueous electrolyte secondary battery having good cycle performance can be obtained by the non-aqueous electrolyte secondary battery having a negative electrode using the inventive silicon-containing material as an active material.

The present invention also provides a method of producing a negative electrode for use in a non-aqueous electrolyte secondary battery by using a silicon-containing material capable of being doped with lithium and de-doped as a negative electrode active material, comprising the steps of: selecting the silicon-containing material such that when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV; and producing the negative electrode for use in a non-aqueous electrolyte secondary battery by using the selected silicon-containing material as the negative electrode active material.

This negative electrode producing method, which includes selecting the silicon-containing material satisfying such a requirement of discharging capacity ratio and using the selected silicon-containing material as a negative electrode active material, can obtain a negative electrode for use in a non-aqueous electrolyte secondary battery having good cycle performance.

The present invention also provides a method of producing a non-aqueous electrolyte secondary battery including a negative electrode and a positive electrode that are capable of occluding and emitting lithium ions and an electrolyte having lithium ionic conductivity, wherein the negative electrode is a negative electrode produced by the foregoing method of producing a negative electrode for use in a non-aqueous electrolyte secondary battery.

The non-aqueous electrolyte secondary battery having good cycle performance can be produced by producing a non-aqueous electrolyte secondary battery using the foregoing negative electrode.

ADVANTAGEOUS EFFECTS OF INVENTION

The silicon-containing material according to the invention can provide good cycle performance as well as higher capacity when used as a negative electrode material of a non-aqueous electrolyte secondary battery. The non-aqueous electrolyte secondary battery, especially the lithium ion secondary battery, having a negative electrode using the inventive silicon-containing material as a negative electrode active material has high capacity and improved cycle performance. The method of producing the negative electrode for use in a non-aqueous electrolyte secondary battery and the method of producing the non-aqueous electrolyte secondary battery according to the present invention can produce the negative electrode and the secondary battery like that.

BRIEF DESCRIPTION OF DRAWINGS

FIG. 1 is a diagram showing an example of the discharge curve in example 1 (sample No. 5), showing the definition of the "ratio of the discharging capacity ranging to 400 mV";
FIG. 2 is a graph showing a relationship between charge and discharge cycles and a discharging capacity maintenance rate in example 1 (sample No. 5);
FIG. 3 is a graph showing relationships between the ratio of the discharging capacity ranging to 400 mV and a discharging capacity maintenance rate (in the 20th cycle) in examples 1 to 3 and comparative examples 1 to 3; and
FIG. 4 is a graph showing initial capacity reduction rates in examples 1 to 3.

DESCRIPTION OF EMBODIMENTS

Presently, it is very important to develop a material for an electrode having large charging and discharging capacities. The research to develop the material is carried out on various places. In such circumstances, silicon and a silicon oxide ($SiO_x$) attract considerable attention as a negative electrode active material for use in a lithium-ion secondary battery, because of its large capacity. A silicon oxide ($SiO_x$) is particularly attractive because the silicon oxide is easier to form fine silicon particles in silicon dioxide than does metallic silicon powder and thereby facilitates improvements in various performances such as the cycle performance due to the fine silicon particles. However, silicon-containing materials that can provide excellent cycle performance allowing for application to a vehicle have not yet been analyzed in an electrochemical manner; a definite procedure for developing these materials has not been established.

The present inventors analyzed the cause of reduction in cycle performance after a lithium-ion secondary battery using silicon and silicon oxide ($SiO_x$) as a negative electrode active material is charged and discharged multiple times, and consequently found the following in regard to the silicon-containing material capable of being doped with lithium and de-doped as an active material. In this analysis, a three-electrode cell produced by using a working electrode including the silicon-containing material, a reference electrode made of metallic lithium, a counter electrode made of metallic lithium, and an electrolyte having lithium ionic conductivity was used. This cell was charged and discharged to measure a relationship between a charging or discharging capacity and a potential of the working electrode on the basis of the reference electrode. The inventors consequently found the following. To improve the cycle performance, attention should be paid to a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV. The inventors thereby brought the invention to completion.

The invention will hereinafter be described in detail. It is to be noted that the symbol "%" described later represents percentage by mass if it concerns the mixing ratio of materials.

The present invention relates to a silicon-containing material, a negative electrode and a non-aqueous electrolyte secondary battery using the same. This silicon-containing material is expected because this material, when used as a negative electrode active material for a lithium-ion secondary battery, exhibits charging and discharging capacities several times as large as a graphite-based material that is mainly used at present. The present invention also provides a method for improving a capacity maintenance rate when charge and discharge are repeated, which can be referred to as the cycle performance.

A silicon-containing material according to the present invention has the following properties. First, the silicon-containing material of the present invention is a silicon-containing material capable of being doped with lithium and de-doped. Furthermore, this silicon-containing material is as follows: when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV. In the explanation of the present invention, a "ratio of a first capacity to a second capacity, where the first capacity is the discharging capacity with respect to a potential range from a potential in a fully charged state to 400 mV, and the second capacity is the discharging capacity with respect to a potential range from a potential in a fully charged state to 2000 mV" is also referred to as the "ratio of the discharging capacity ranging to 400 mV." It is possible to achieve higher capacity and to improve the cycle performance by using the silicon-containing material satisfying such a condition as a negative electrode of a non-aqueous electrolyte secondary battery. The ratio of the discharging capacity ranging to 400 mV is preferably 42% or more, and more preferably 45% or more. If the ratio of the discharging capacity ranging to 400 mV is less than 38%, sufficient cycle performance cannot be obtained.

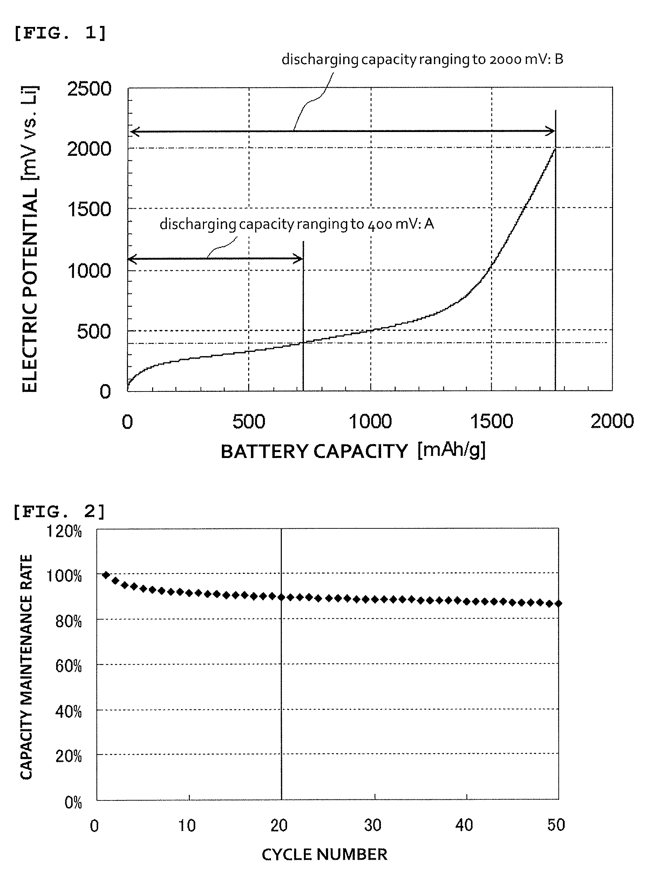

The definition of the ratio of the discharging capacity ranging to 400 mV will be explained referring to FIG. 1. FIG. 1 is a diagram showing an example of the discharge curve in Example 1 (sample No. 5) described later. In Fig. 1, the vertical axis indicates a potential referred to metallic lithium, and the abscissa indicates a battery capacity. The "discharging capacity with respect to a potential range from a potential in a fully charged state to 400 mV" is represented by the battery capacity of "A" in FIG. 1. The "discharging capacity with respect to a potential range from a potential in a fully charged state to 2000 mV" is represented by the battery capacity of "B" in FIG. 1. The ratio of the discharging capacity ranging to 400 mV is the quotient which is obtained by dividing A by B. The ratio of the discharging capacity ranging to 400 mV is represented as follows in percentage terms.

The ratio of the discharging capacity ranging to

$$\text{The ratio of the discharging capacity ranging to 400 mV} = A/B \times 100 \ [\%]$$

In addition, the discharge is preferably carried out under conditions of a current density ranging from 0.1 to 0.4 mA/cm$^2$ and a constant current in this measurement. When the current density is more than 0.4 mA/cm$^2$, it comes to difficult to measure accurate voltage due to a marked influence of an ohmic potential drop and so on. When the current density is less than 0.1 mA/cm$^2$, the condition is very different from the evaluation assuming a practical battery. For the same reason, when the discharge conditions are determined by a C discharge rate, a value ranging from 0.015 to 0.05 is preferable.

The silicon-containing material of the present invention can be a silicon composite configured such that silicon fine crystals or silicon fine particles are dispersed in a substance having a different composition from a composition of the silicon fine crystals or the silicon fine particles. In this case, the substance having the different composition from the composition of the silicon fine crystals or the silicon fine particles can be a silicon-based compound. Moreover, this silicon-containing material can be a silicon oxide represented by a general formula of $SiO_x$ (where $0.9 \leq x < 1.6$) and a disproportionation product of the silicon oxide. It is possible to achieve higher capacity by using such silicon-containing material.

If a silicon oxide is mainly used as the raw material of the silicon-containing material, then the amount of dispersed silicon fine particles in the silicon dioxide is preferably in the range from about 2 to 36 mass%, more preferably in the range from 10 to 30 mass%. When this amount of dispersed silicon is 2 mass% or more, the charging and discharging capacities can be made sufficient; when this amount is 36 mass% or less, sufficient cycle performance can be improved.

If metallic silicon is used as the raw material of the silicon-containing material, then the amount of dispersed silicon fine particles in the composite is preferably in the range from 10 to 95 mass%, particularly in the range from 20 to 90 mass%. When this dispersion amount is 10 mass% or more, an advantage of the metallic silicon raw material can be exploited; when this amount is 95 mass% or less, the dispersion state of the silicon particles can be readily maintained, and the cycle performance can be improved.

The average particle size of the silicon-containing material is preferably 0.01 $\mu$m or more, more preferably 0.1

μm or more, further preferably 0.2 μm or more, particularly preferably 0.3 μm or more. The upper limit of this average particle size is preferably 30 μm or less, more preferably 20 μm or less, further preferably 10 μm or less. When the average particle size is 0.01 μm or more, the bulk density is sufficiently large, and charging and discharging capacities per unit volume can be sufficiently increased. When the average particle size is 30 μm or less, an electrode film can be readily produced and prevented from peeling from a current collector, so this size is preferable. It is to be noted that the average particle size is a value measured as mean cumulative mass $D_{50}$ (i.e., a particle size when a cumulative mass is 50% or a median size) in measurement of particle size distribution by a laser diffraction scattering.

The BET specific surface area of the inventive silicon-containing material is preferably 0.1 $m^2$/g or more, more preferably 0.2 $m^2$/g or more. The upper limit of this BET specific surface area is preferably 30 $m^2$/g or less, more preferably 20 $m^2$/g or less. When the BET specific surface area is 0.1 $m^2$/g or more, its surface activity can be made sufficient and the binding strength of a binder when an electrode is produced can be increased, resulting in an improvement in the cycle performance when charge and discharge are repeated. When the BET specific surface area is 30 $m^2$/g or less, the amount of a solvent to be absorbed when an electrode is produced is sufficiently small, and no large amount of binder is needed to maintain the binding strength, so this range is preferable. This leads to sufficient conductivity and enables an increase in the cycle performance. It is to be noted that these BET specific surface areas are values measured by a single point BET method using the amount of an $N_2$ gas to be absorbed.

It is desirable for the surface of the inventive silicon-containing material to be coated with a conductive coating. In this case, the conductive coating can be mainly made of carbon.

The coating made of a conductive substance on the surface of particles of the silicon-containing material can achieve an improved structure to collect current. This coating prevents the creation of a particle that fails to contribute charge and discharge and allows a negative electrode material for use in non-aqueous electrolyte secondary battery having a high coulombic efficiency at the initial stage of repetition of charging and discharging to be obtained. Examples of the conductive substance include metal and carbon. Although a common method of coating with the conductive substance is physical vapor deposition (PVD) or chemical vapor deposition (CVD), it is also acceptable to use electroplating or a method of forming carbon by carbonization of an organic substance. Moreover, when the conductive material is formed as the foregoing, it is possible to improve the ability to collect current by forming composite particles of particles of the silicon-containing material and the conductive material (i.e., the silicon-containing material coated with a coating of a conductive material is made to comprise secondary particles wherein particles of the silicon-containing material are mixed with the conductive material). For example, a composite secondary particles of carbon and particles of the silicon-containing material can be formed by carbon coating of the silicon-containing material containing fine particles having a particle size of 0.5 μm or less through chemical vapor deposition method. In this case, good charge/discharge property can be obtained by an improvement of the ability to collect current between the silicon-containing particles.

The silicon-containing material preferably contains lithium. This silicon-containing material doped with lithium can reduce the initial irreversible capacity and improve the first-cycle efficiency. Although the silicon-containing material can be directly doped with metallic lithium, it is desired to take a measure for improving safety: the silicon-containing material and metallic lithium are added to an organic solvent to disperse the metallic lithium. Alternatively, the silicon-containing material can be doped with lithium by mixing the silicon-containing material and a compound such as lithium hydride and lithium aluminum hydride and heating the resultant under an inert atmosphere. The amount of doped lithium preferably ranges from 5 to 30%.

A preferred embodiment of a secondary battery according to the invention is as follows.

(Negative electrode)

The inventive negative electrode for use in a non-aqueous electrolyte secondary battery uses the inventive silicon-containing material as a negative electrode active material. The inventive silicon-containing material and carbon can be used as this negative electrode active material.

When a negative electrode is produced by using a silicon-containing material as a main material of the negative electrode active material, a negative electrode mixture of 50 to 95% of the silicon-containing material, 0 to 50% of a conductive additive, and 1 to 30% of a binder is applied to a metallic foil that functions as a current collector, such as copper or stainless steel foil; the resultant is used as the negative electrode. When the negative electrode is produced by using, as the active material, a mixture of a silicon-containing material and a carbon-based negative electrode material such as graphite, a mixture of 1 to 50% of the silicon-containing material, 50 to 99% of the carbon-based negative electrode active material such as graphite or hard carbon, and 1 to 30% of a binder is applied to a metallic foil that functions as a current collector, such as copper or stainless steel foil; the resultant can be used as the negative electrode.

In the formation of the negative electrode by using the silicon-containing material, a common method can be used in which a slurry obtained from a mixture of the material, an organic binder and a solvent is applied to copper or stainless steel foil that functions as the current collector and dried.

The type of the conductive additive that can add when the negative electrode is produced is not particularly limited, provided the conductive additive is a material having electron conductivity that neither decomposes nor transmutes in a battery produced with this material. Specific examples of the conductive additive include powder or fiber of metal such as Al, Ti, Fe, Ni, Cu, Zn, Ag, Sn, and Si, and natural graphite, synthetic graphite, various types of coke powder, mesophase carbon, acetylene black, ketjenblack, carbon nanofiber (such as carbon nanotube), graphite, vapor-grown carbon fiber, pitch-based carbon fiber, polyacrylonitrile (PAN) based carbon fiber, and graphite such as various types of sintered resin.

Various organic substances that are not dissolved nor decomposed in a battery such as polyimide, styrene-butadiene rubber (SBR), polyacrylic acid, and polyvinylidene fluoride can be used as the binder in the negative electrode.

Various additives such as a thickener can be added to the negative electrode as needed. The foil of the current collector can be subjected to a surface treatment such as a carbon coating process.

The negative electrode of this type has good cycle performance, so this is preferable.

(Positive electrode)

Examples of a positive electrode material that can be used as a positive electrode active material include a transition metal oxide and a chalcogen compound such as lithium cobalt oxide ($LiCoO_2$), lithium nickel oxide ($LiNiO_2$), lithium manganese oxide ($LiMn_2O_4$), $V_2O_5$, $MnO_2$, $TiS_2$, and $MoS_2$, a solid solution or mixture thereof, oxoacid metal lithium represented by lithium metal phosphate.

A positive electrode mixture of this positive electrode active material, a conductive additive, and a binder is applied to metallic foil that functions as the current collector, such as aluminum or stainless steel foil; the resultant can be used as the positive electrode. The amount of the positive electrode active material preferably ranges from 50% to 99%.

Examples of the conductive additive in the positive electrode that can be used include conductive materials such as acetylene black, ketjenblack, carbon nanofiber, graphite, and a mixture thereof. The conductive additive is preferably added in a content of 0 to 50%.

The positive electrode preferably contains various organic substances, such as polyimide, styrene-butadiene rubber, polyacrylic acid, and polyvinylidene fluoride, in a content of 1 to 30% as the binder.

Various additives such as a thickener can be added to the positive electrode as needed. The foil of the current collector can be subjected to a surface treatment such as a carbon coating process.

(Electrolyte)

The electrolyte used is a non-aqueous electrolyte obtained by dissolving lithium salt such as lithium hexafluorophosphate, and lithium perchlorate in an organic solvent. Examples of the organic solvent (non-aqueous solvent) include propylene carbonate, ethylene carbonate, 1,2-dimethoxyethane, γ-butyrolactone, 2-methyltetrahydrofuran, and a combination thereof. In addition to these solutions, various solid electrolytes and other non-aqueous electrolytes may be used: for example, various types of ionic liquid containing lithium ion, a solid electrolyte having lithium ionic conductivity, a pseudo-solid electrolyte containing ionic liquid and fine powder.

(Separator)

When a liquid electrolyte is used, a separator is preferably disposed between the negative and positive electrodes. A preferred material of the separator is insoluble in the electrolyte and can withstand an electric potential of the electrodes. Examples of this material include an organic substances such as polyolefin and polyimide, and inorganic fiber such as glass. A porous film or nonwoven fabric is formed from such a material and used as a sheet that allows lithium ions to pass through. This sheet may be coated with an inorganic substances to improve heat resistance and wettability as needed.

(Configuration of a battery)

The inventive non-aqueous electrolyte secondary battery is a non-aqueous electrolyte secondary battery including the negative and positive electrodes that are capable of occluding and emitting lithium ions and the electrolyte having lithium ionic conductivity, and includes the negative electrode for use in a non-aqueous electrolyte secondary battery using the inventive silicon-containing material described above as a negative electrode. Further, it may include the separator disposed between the positive and negative electrodes according to the needs as described above. Such inventive non-aqueous electrolyte secondary battery is preferred since a non-aqueous electrolyte secondary battery having high cycle performance is obtained.

When a solid or semisolid electrolyte is used, the electrolyte can be disposed between the positive and negative electrodes instead of the separator. The positive electrode, the separator or the solid or semisolid electrolyte, and the negative electrode may be used as one set, or a plurality of sets. A set or sets of electrodes may be wound or folded. The negative electrode mixture and the positive electrode mixture can be formed on both surfaces of the foil body of the current collector so that a battery container is efficiently filled with the active materials. When the liquid electrolyte is used, the set of the electrodes interposing the separator therebetween can be housed in the battery container and the electrolyte can be poured therein to produce a battery. When the solid or semisolid electrolyte is used, the set of the electrodes interposing the electrolyte therebetween can be housed in the battery container to produce a battery. It is to be noted that well-known battery containers such as a coin type, square type, or laminate type container can be used.

Methods of producing the silicon-containing material, the negative electrode, and the secondary battery according to the invention will now be descried, but the invention is not limited to these methods.

The inventive method of producing a negative electrode for use in a non-aqueous electrolyte secondary battery is a method of producing a negative electrode for use in a non-aqueous electrolyte secondary battery by using a silicon-containing material capable of being doped with lithium and de-doped as a negative electrode active material, comprising the steps of: selecting the silicon-containing material such that when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity (a "ratio of the discharging capacity ranging to 400 mV") is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV; and producing the negative electrode for use in a non-aqueous electrolyte secondary battery by using the selected silicon-containing material as the negative electrode active material. The ratio of the discharging capacity ranging to 400 mV is preferably 42% or more, and more preferably 45% or more.

This negative-electrode producing method, which uses the silicon-containing material selected exhibiting a ratio of the discharging capacity ranging to 400 mV is 38% or more, can obtain a negative-electrode for use in a non-aqueous electrolyte secondary battery having good cycle performance.

By way of example of the silicon-containing material satisfying the above requirement, silicon oxide represented by a general formula of $SiO_x$ (where $0.9 \leq x < 1.6$) will be described.

The inventive method of producing silicon oxide powder follows, for example, a reaction scheme described below. In the invention, an exemplary raw material can be a mixed powder of silicon dioxide powder and metallic silicon powder. It is particularly important to adjust the average particle size of the silicon dioxide powder to 0.1 $\mu$m or less and the average particle size of the metallic silicon powder to 30 $\mu$m or less.

$Si(s) + SiO_2(s) \rightarrow 2SiO(g)$; Collected after cooled and solidified.

The average particle size of the silicon dioxide powder used in the invention is preferably 0.1 $\mu$m or less, more preferably 0.01 to 0.1 $\mu$m, particularly preferably 0.01 to 0.08 $\mu$m. The average particle size of the metallic silicon powder used in the invention is preferably 30 $\mu$m or less, more preferably 0.05 to 30 $\mu$m, particularly preferably 0.1 to 20 $\mu$m. When the average particle size of the silicon dioxide powder is 0.1 $\mu$m or less and the average particle size of the metallic silicon powder is 30 $\mu$m or less, reactivity can be made sufficient. In addition, a reaction rate can be made sufficient without creating reaction residue, resulting in sufficient productivity. It is to be noted that this average particle size can be measured as mean cumulative mass $D_{50}$ or a median size in measurement of particle size distribution by a laser diffraction scattering.

In this case, the type of the silicon dioxide powder used is preferably, but not particularly limited to, fumed silica, in the viewpoint of cost. The metallic silicon powder is not particularly limited, and can be produced by pulverizing metallic silicon lumps to a prescribed size with a common pulverizer such as a ball mill, a jet mill, or a media agitating mill.

Both types of the powder are ideally mixed at the same mole according to the above expression. According to the consideration by the inventors, however, the reactivity is somewhat improved when the ratio of the metallic silicon is higher than the silicon dioxide. It can be assumed that this is affected by a native oxide film on the metallic silicon or a minute amount of oxygen in a reactor. Accordingly, the mole ratio of the metallic silicon powder to the silicon dioxide powder is preferably more than 1 and less than 1.1, more preferably in the range from 1.01 to 1.08. When this mole ratio of the metallic silicon powder to the silicon dioxide powder is 1 or more, the reaction can be perfectly caused without creating reaction residue of silicon dioxide. When this mole ratio of the metallic silicon powder to the silicon dioxide powder is 1.1 or less, the reaction can also be perfectly caused without creating reaction residue of the metallic silicon.

The conditions under which the silicon dioxide powder and the metallic silicon powder are mixed are not particularly limited. A mixer such as a ball mill or a mixer that shears at a high speed is preferably used to well mix the powder, because when the powder is well mixed, the reactivity is apt to increase. In some cases, water is added to the above mixture, so that contact efficiency can be increased due to adsorbing power. In this case, the mixture after water is added is dried, and the resultant is used as the raw material.

The mixture of the metallic silicon powder and the silicon dioxide powder, having the above physical property, is heated at temperatures from 1,100°C to 1,450°C under an inert gas or a reduced pressure to generate silicon monoxide gas. In this process, whether the reactivity is improved greatly depends on the atmosphere in a furnace, particularly the degree of vacuum; the atmosphere in the furnace is preferably under a reduced pressure. In this case, the degree of vacuum is preferably 80 Pa or less, particularly in the range from 1 to 50 Pa. This degree of vacuum enables the ratio of the discharging capacity ranging to 400 mV of the obtained silicon oxide to satisfy the above requirement, so this degree of vacuum is preferable. The reaction temperature preferably ranges from 1, 100°C to 1, 450°C, particularly from 1, 300°C to 1,420°C. When the reaction temperature is 1,100°C or more, vapor pressure of the silicon monoxide gas can be made sufficient. The reactivity can also be made sufficient. The reaction thereby does not take a long time, resulting in sufficient efficiency. When the reaction temperature is 1,450°C or less, the reactivity can be made sufficient without melting the raw material of the metallic silicon powder.

The generated silicon monoxide gas is then precipitated on a base. This base for precipitation is not particularly limited by its material and shape. This material may be selected properly from the group of a metal such as stainless steel (SUS), copper, molybdenum and tungsten, graphite, ceramic such as alumina, mullite, silicon carbide, and silicon nitride, depending on the purpose or application; stainless steel is preferably used because of its strength and cost advantage.

Although the size and shape of a reaction chamber and a precipitation chamber are not particularly limited, a highly airtight apparatus is preferably used in which the degree of leak is 100 lusec or less because poor airtightness increases the amount of oxygen of the precipitates on the base. Note that 100 lusec corresponds to the degree of leak that causes pressure to increase by 1 $\mu$Hg per second in a 1-litter vacuum container; 1 lusec=1/760 atm·ml/sec≈1.32×10⁻³ atm·ml/sec. The precipitation method is not particularly limited; whether this method is carried out continuously or in a batch manner is properly selected.

A method of producing $SiO_x$ (where 0.9≤x<1.6), which is the inventive silicon-containing material, by performing a heat treatment to stabilize the silicon oxide represented by a general formula of SiO obtained in the above manner under an inert gas atmosphere or a reducing atmosphere will now be described, but the invention is not limited to this method.

The heat treatment on the silicon oxide is preferably performed at 1,200°C or less. When the temperature of this heat treatment is 1,200°C or less, the value of the ratio of the discharging capacity ranging to 400 mV satisfies the foregoing requirement, and thereby the cycle performance is improved, so this temperature is preferable. The temperature of this heat treatment is more preferably 1150°C or less, further preferably 1000°C or less, particularly preferably 900°C or less. It is to be noted that when the silicon oxide is obtained by cooling and precipitating the silicon monoxide gas produced by heating the mixture of silicon dioxide and metallic silicon, the temperature of the base plate often becomes 500°C or more. In other words, the silicon oxide is often obtained substantially by performing a heat treatment at temperatures of 500°C or more. The substantial lower limit of the heat treatment temperature can accordingly be regarded as being 500°C.

The time for this heat treatment on the silicon oxide can be adjusted properly within the range from 10 minutes to 20 hours, particularly within the range from 30 minutes to 12 hours, depending on the heat treatment temperature; for example, when the heat treatment temperature is 1,100°C, about 5 hours is preferable.

This heat treatment on the silicon oxide is not particularly limited, provided a reactor having a heater is used under an insert gas atmosphere. This heat treatment can be performed continuously or in a batch manner. More specifically, a fluidized bed reactor, a rotary furnace, a vertical moving bed reactor, a tunnel furnace, a batch furnace, a rotary kiln, and so on may be selected properly depending on the purpose. In this heat treatment, a gas that is inert at the above heat treatment temperature, such as Ar, He, $H_2$, or $N_2$, can be used singly or as a mixed gas.

Thus the silicon-containing material represented by a general formula of $SiO_x$ configured such that silicon fine crystals or silicon fine particles are dispersed in $SiO_2$ can be obtained.

A method of producing a conductive silicon-containing material by coating the silicon-containing material obtained in the above manner with a coating of a conductive material (a conductive coating) will now be described. When silicon oxide powder is used as a raw material, this method can function as the above stabilization heat treatment. The silicon-containing material is not limited, provided the requirement in which the ratio of the discharging capacity ranging to 400 mV is 38% or more is satisfied. The method of producing the conductive silicon-containing material (the silicon-containing material whose surface is coated with a coating of a conductive material) is not particularly limited; an example of this method is to coat particles configured such that silicon fine particles are dispersed in a compound having a different composition from a composition of the silicon fine particles with carbon. In particular, the following methods I to IV are preferably used as the method of producing the conductive silicon-containing material.

Method I:

Silicon oxide powder represented by a general formula of $SiO_x$ (where 0.9≤x<1.6) or silicon composite powder is used as a raw material. This silicon composite powder is obtained by adding silicon dioxide or alumina, etc. to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This raw material is subjected to a heat treatment at temperatures ranging from 600 to 1,200°C, preferably from 700 to 1,150°C, more preferably from 700 to 1,000°C, further preferably from 700 to 900°C, under an atmosphere containing at least an organic gas and/or vapor. This heat treatment causes the silicon oxide powder of the raw material to disproportionate to a composite of silicon and silicon dioxide and chemically vapor-deposits carbon on its surface.

Method II:

Silicon oxide powder represented by a general formula of $SiO_x$ (where $0.9 \leq x < 1.6$) or silicon composite powder is used as a raw material. This silicon composite powder is obtained by adding silicon dioxide or alumina, etc. to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This silicon oxide powder or this silicon composite powder is previously heated at temperatures ranging from 600 to 1,200°C under an inert gas stream. The resultant is used as a raw material. This raw material is subjected to a heat treatment at temperatures ranging from 600 to 1,200°C, preferably from 700 to 1,150°C, more preferably from 700 to 1,000°C, under an atmosphere containing at least an organic gas and/or vapor. This heat treatment chemically vapor-deposits carbon on its surface.

Method III:

Silicon oxide powder represented by a general formula of $SiO_x$ (where $0.9 \leq x < 1.6$) or silicon composite powder is used as a raw material. This silicon composite powder is obtained by adding silicon dioxide or alumina, etc. to metallic silicon powder composed of silicon fine particles and strongly pulverizing and mixing the resultant. This silicon composite powder is configured such that the silicon fine crystals or particles are dispersed in a substance having a different composition from a composition of the silicon fine crystals or particles. This raw material is subjected to a heat treatment at temperatures ranging from 500 to 1,200°C, preferably from 500 to 1,000°C, more preferably from 500 to 900°C, under an atmosphere containing at least an organic gas and/or vapor. This heat treatment chemically vapor-deposits carbon on its surface. A heat treatment is then performed at temperatures ranging from 600 to 1,200°C, preferably from 700 to 1,150°C, more preferably from 700 to 1,000°C, under an inert gas atmosphere.

Method IV:

Silicon oxide powder represented by a general formula of $SiO_x$ (where $0.9 \leq x < 1.6$) or silicon composite powder produced by adding silicon dioxide or alumina etc., to metallic silicon powder composed of silicon fine particles and strongly pulverizing and mixing the resultant is prepared. This silicon composite powder is configured such that the silicon fine crystals or particles are dispersed in a substance having a different composition from a composition of the silicon fine crystals or particles. This silicon composite powder is mixed with a carbon source such as sucrose. The resultant is then subjected to carbonization at temperatures ranging from 500 to 1,200°C, preferably from 500 to 1,000°C, more preferably from 500 to 900°C, and used as a raw material. This raw material is subjected to a heat treatment at temperatures ranging from 600 to 1,200°C, preferably from 700 to 1,150°C, more preferably from 700 to 1,000°C, under an inert gas atmosphere.

In the above method I or II, if the chemical vapor deposition (i.e., thermal CVD), which may be performed at temperatures ranging from 600 to 1,200°C (preferably from 700 to 1,150°C, more preferably from 700 to 1,000°C), is performed by a heat treatment at 600°C or more, a obtained carbide has sufficient conductivity. In addition to this, the conductivity hardly varies, and possibility of causing variance of the battery characteristics as a negative electrode material can thereby be sufficiently prevented. When this heat treatment is performed at 1,200°C or less, the value of the ratio of the discharging capacity ranging to 400 mV can satisfy the above requirement, and the cycle performance can be improved, so this temperature is preferable.

In the above method IV, when the temperature of the heat treatment for the carbonization is 500°C or more, the conductivity of the obtained carbide can be made sufficient. In addition to this, the conductivity hardly varies, possibility of causing variance of the battery characteristics as a negative electrode material can be sufficiently prevented. When the temperature of the heat treatment is 1,200 or less, the value of the ratio of the discharging capacity ranging to 400 mV can satisfy the above requirement, and the cycle performance can be improved, so this temperature is preferable.

In the above method III or IV, since the heat treatment on the silicon composite powder is performed at temperatures ranging from 600 to 1,200°C, particularly from 700 to 1,000°C after the carbon coating process, the silicon composite powder and the conductive carbon coating in which the carbon atoms are aligned (crystallized) can be finally combined on the surface even when the carbon coating process is performed at temperatures of less than 600°C.

In this way, the thermal CVD (chemical vapor deposition at 600°C or more) and carbonization are preferably performed to form the carbon film. The time for these processes is determined properly according to the relation with the amount of carbon. These processes may cause the particles to aggregate. These aggregated particles are preferably pulverized, for example, with a ball mill. Alternatively, the thermal CVD is repeated in the same manner depending on the circumstances.

In the method I, it is necessary to properly determine the temperature, the processing time, the type of raw material to generate the organic gas, and the concentration of an organic gas of the chemical vapor deposition and the heat treatment. The time for the heat treatment is normally selected from the range from 0.5 to 12 hours, preferably from 1 to 8 hours, particularly from 2 to 6 hours. This heat treatment time is also related to the heat treatment temperature; for example, when the heat treatment temperature is 900°C, the heat treatment is preferably performed for at least 3 hours or more.

In the method II, the heat treatment time (the time for the CVD) is normally selected from the range from 0.5 to 12 hours, particularly from 1 to 6 hours if this heat treatment is performed under an atmosphere containing an organic gas and/or vapor. It is to be noted that the time for the heat treatment previously performed on the silicon oxide of $SiO_x$ can be normally 0.5 to 6 hours, particularly 0.5 to 3 hours.

In the method III, the time (the time for the CVD) for the heat treatment previously performed on the silicon composite powder under an atmosphere containing an organic gas and/or vapor can be normally 0.5 to 12 hours, particularly 1 to 6 hours. The time for the heat treatment under an inert gas atmosphere can be normally 0.5 to 6 hours, particularly 0.5 to 3 hours.

In the method IV, the time for the carbonization previously performed on the silicon composite powder can be normally 0.5 to 12 hours, particularly 1 to 6 hours. The time for the heat treatment under an inert gas atmosphere can be normally 0.5 to 6 hours, particularly 0.5 to 3 hours.

The organic material used as the raw material to generate an organic gas in the invention is selected from materials capable of producing carbon (graphite) by pyrolysis at the above heat treatment temperature particularly under a non-oxidizing atmosphere. Examples of such organic materials include aliphatic or alicyclic hydrocarbon, such as methane, ethane, ethylene, acetylene, propane, butane, butene, pentane, isobutane, hexane, and a mixture thereof, and monocyclic to tricyclic aromatic hydrocarbons, such as benzene, toluene, xylene, styrene, ethylbenzene, diphenylmethane, naphthalene, phenol, cresol, nitrobenzene, chlorobenzene, indene, cumarone, pyridine, anthracene, phenanthrene, and a mixture thereof. In addition to these, gas light oils, creosote oils, anthracene oils, naphtha-cracked tar oils that are produced in the tar distillation process can be used alone or as a mixture. The carbon source used for the carbonization can be various organic substances: carbohydrate such as sucrose, and various kinds of hydrocarbon such as acrylonitrile and pitch, or a derivative thereof, as well known examples.

At least one of the thermal CVD (the thermal chemical vapor deposition), the heat treatment, and the carbonization may be performed with a reactor having a heater is used under a non-oxidizing atmosphere, although these processes are not particularly limited. These processes can be performed, for example, continuously or in a batch manner. More specifically, a fluidized bed reactor, a rotary furnace, a vertical moving bed reactor, a tunnel furnace, a batch furnace, a rotary kiln, and so on may be selected properly depending on the purpose. A gas (processing gas) used in this heat treatment can be the above organic gas or a mixed gas of the organic gas and a non-oxidizing gas such as Ar, He, $H_2$, or $N_2$.

In this case, a preferable reactor has a rotatable furnace tube of the rotary furnace or rotary kiln, etc. that is horizontally provided. Use of this reactor to perform the chemical vapor deposition while moving the silicon oxide particles enables stable production without causing these silicon oxide particles to aggregate. The rotational speed of the furnace tube is preferably 0.5 to 30 rpm, particularly 1 to 10 rpm. It is to be noted that this reactor is not particularly limited, provided the reactor has the furnace tube capable of maintaining the atmosphere, a rotating mechanism to rotate the furnace tube, and a heater to increase and maintain the temperature. Depending on the purpose, the reactor may be provided with a mechanism to supply a raw material (e.g., a feeder), a mechanism to collect goods (e.g., a hopper), or the furnace tube may be inclined or provided with a baffle plate to control the residence time of the raw material. The material of the furnace tube is not particularly limited, and may be selected properly from the group of ceramic such as silicon carbide, alumina, mullite, and silicon nitride, a metal having a high melting point such as molybdenum and tungsten, stainless steel (SUS), and quartz, depending on the conditions or purpose of the processes.

When the linear velocity u (m/sec) of fluidizing gas is within the range satisfying $1.5 \leq u/u_{mf} \leq 5$, where $u_{mf}$ is the velocity at the beginning of the fluidization, the conductive coating can be more efficiently formed. When $u/u_{mf}$ is 1.5 or more, the fluidization is satisfactory, and the conductive coating is prevented from having variation. When $u/u_{mf}$ is 5 or less, secondary aggregation of particles is prevented from occurring, resulting in the formation of a uniform conductive coating. It is to be noted that the velocity at the beginning of the fluidization varies depending on the size of particles, a processing temperature, a processing atmosphere, and so on. This velocity at the beginning of the fluidization can be defined as the value of the linear velocity of fluidizing gas when powder pressure loss becomes W/A where W is the weight of powder and A is the cross sectional area of a fluidization layer as the fluidizing gas (linear velocity) is gradually increased. It is to be noted that $u_{mf}$ can be normally 0.1 to 30 cm/sec, preferably 0.5 to 10 cm/sec. The particle size that provides these values of $u_{mf}$ is preferably 0.5 to 100 $\mu$m, more preferably 5 to 50 $\mu$m. When the particle size is 0.5 $\mu$m or more, the occurrence of the secondary aggregation can be prevented, and the surface of each particle can be effectively treated.

On the other hand, when the silicon oxide particles containing particles having particle size of 0.5 $\mu$m or less, the composite secondary particles of carbon and silicon oxide particles can be formed. In this case, the ability to collect current between the silicon oxide particles are improved, and thereby good charge/discharge property can be obtained.

It is to be noted that when silicon oxide is heated, it divides to metallic silicon particle and silicon dioxide by disproportionation reaction, and thereby metallic silicon particles grow. In this case, the crystallite size of the metallic silicon particles is preferably 6 nm or less, and is more preferably 4 nm or less in order to maintain the ratio of the discharging capacity ranging to 400 mV to be 38% or more. However, it tends to cause problems such as a lowering of an initial charge/discharge efficiency, when the crystallite size of the metallic silicon particles is 1 nm or less. It is possible to control the crystallite size of the metallic silicon adequately by satisfying the foregoing CVD temperature condition.

The silicon-containing material (the silicon composite powder) or the conductive silicon-containing material (the conductive silicon composite powder) obtained by the foregoing methods allows the produced negative electrode active material to prevent the degradation of the initial capacity efficiency and the capacity at the initial charging and discharging cycle (i.e., decreasing rate of the initial capacity) by being doped with lithium.

One exemplary method is to mix the silicon-containing material (the silicon composite powder) or the conductive silicon-containing material (the conductive silicon composite powder) with lithium hydride, lithium aluminum hydride, or lithium alloy and then heat the resultant. Another exemplary method is to add the silicon-containing material (the silicon composite powder) or the conductive silicon-containing material (the conductive silicon composite powder) and lithium metal into a solvent, mix the resultant, and then pre-dope the material with lithium by performing a heat treatment to form lithium silicate.

When the silicon-containing material (the silicon composite powder) or the conductive silicon-containing material (the conductive silicon composite powder) and lithium metal are added into a solvent and the resultant is mixed, the solvent can be selected from the group consisting of carbonates, lactones, sulfolanes, ethers, hydrocarbons, and a mixture thereof that do not react with lithium metal and a lithium-doped material. Use of such a solvent can more effectively prevent electrical storage devices such as batteries or capacitors produced with the produced negative electrode material doped with lithium from being affected by the decomposition when the devices are charged or discharged.

The solvent can be configured such that the solvent does not react with lithium metal and a lithium-doped material and has a boiling point of 65°C or more. The solvent having a boiling point of 65°C or more can more effectively prevent the difficulty in uniformly mixing lithium metal due to the evaporation of the solvent when mixed.

A thin-film spin high speed kneader can be used for the above mixing process. The thin-film spin high speed kneader can also be used after the process of mixing the material with the solvent in which lithium metal has been added. In this manner, use of the thin-film spin high speed kneader enables an efficient mixing process. In view of the rate of lithium pre-doping and the productivity, lithium metal having a thickness of 0.1 mm or more is preferably used.

The heat treatment can be performed at temperatures ranging from 200 to 1,000°C. This temperature is preferably 200°C or more to efficiently undergo a chemical change from active lithium to stable lithium silicate. When this temperature is 1,000°C or less, preferably 900°C or less, the value of the ratio of the discharging capacity ranging to 400 mV satisfies the above requirement, and the degradation of the cycle performance can be more effectively prevented.

A method of producing a non-aqueous electrolyte secondary battery according to the present invention will now be described, but the invention is not limited to this method. The inventive method produces a non-aqueous electrolyte secondary battery including a negative electrode and a positive electrode that are capable of occluding and emitting lithium ions and an electrolyte having lithium ionic conductivity. This negative electrode is produced by the inventive method of producing a negative electrode for use in a non-aqueous electrolyte secondary battery.

A silicon-containing material according to the present invention can be used as a negative electrode material (a negative electrode active material) to produce a non-aqueous electrolyte secondary battery, particularly a lithium-ion secondary battery, having a high capacity and an excellent cycle performance.

EXAMPLES

The present invention will be more specifically described below with reference to examples and comparative examples, but the invention is not limited to these examples. It is to be noted that the symbol "%" described later represents percentage by mass if it concerns the mixing ratio of materials.

(Example 1)

The silicon-containing materials coated with a coating of carbon (sample Nos. 1 to 6) were prepared by the following method.

After 200 g of silicon oxide powder ($SiO_x$: x=1.02) which has an average particle size of 2 $\mu$m and contains 25% of particles having a particle size of 0.5 $\mu$m or less was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while a mixed gas of methane and argon was introduced at a rate of 2 NL/min. The temperature was maintained within the range from 600°C to 1,000°C for 3 to 10 hours, so as to perform thermal chemical vapor deposition (CVD) for a carbon coating. After the maintenance, the temperature was decreased until the temperature reached room temperature. The powder was then taken out. The amount of the deposited carbon of the obtained conductive silicon composite powder was in the range from 5.3% to 18.5%. The average particle size of the obtained powder had grown to 3 $\mu$m or more, and the contents of particles having a particle size of 0.5 $\mu$m or less had decreased to 10% or less. This reveals that carbon and silicon oxide particles had configured matrices by forming a composite and secondary particles.

[Battery evaluation]

The silicon-containing material (the silicon-containing material coated with a coating of carbon) obtained by this method was used to evaluate a battery in the following manner.

First, 75% of the obtained silicon-containing material (containing the weight of the coating of carbon), 5% of acetylene black, 5% of carbon nanotube, and 15% of polyimide were mixed together with a dispersing agent of N-methylpyrrolidone to form a slurry. The slurry was then applied to 15-$\mu$m-thickness copper foil. This sheet after the application was pre-dried at 85°C under a vacuum for 30 minutes, and then pressed with a roller press. The resultant was dried under a vacuum at 400°C for 2 hours and finally die-cut into a working electrode having an area of 2 cm$^2$.

Then, metallic lithium having a thickness of 0.2 mm was die-cut into a counter electrode having an area of 2 cm$^2$.

Then, a lithium-ion secondary battery for evaluation was produced by using the obtained working electrode, the counter electrode, a reference electrode made of metallic lithium, a non-aqueous electrolyte wherein 1 mole/L of lithium hexafluorophosphate dissolved in a mixed solution of ethylene carbonate and 1,2-dimethoxyethane with volume mixing ratio of 1:1, and a 30-$\mu$m-thickness separator made of a polyethylene microporous film.

The produced lithium-ion secondary battery was left at room temperature overnight, and then charged with a constant current of 1.9 mA (0.95 mA/cm$^2$) until the voltage of the negative electrode with respect to the reference electrode reached 5 mV by using a secondary battery charging and discharging tester. After this voltage reached 5 mV, the charging was continued while the current was decreased such that the cell voltage kept 5 mV. When the current was decreased to less than 0.2 mA, the charging was terminated. After the termination of the charging, the battery was then discharged with a constant current of 0.6 mA (0.3 mA/cm$^2$). When the cell voltage exceeded 2,000 mV, the discharging was terminated. From the obtained discharge curve, the capacity A of the discharging capacity with respect to a potential range from a potential in a fully charged state to 400 mV and the capacity B of the discharging capacity with respect to a potential range from a potential in a fully charged state to 2000 mV were obtained to calculate the ratio of the discharging capacity ranging to 400 mV.

FIG. 1 shows the discharge curve of sample No. 5. It is to be noted that the battery capacity in FIG. 1 was plotted after conversion into a battery capacity per gram of the silicon-containing material.

As shown in Fig. 1, the ratio of the discharging capacity of sample No. 5 is as follows:

- A of the discharging capacity ranging to 400 mV = 710 mA/g
- B of the discharging capacity ranging to 2000 mV = 1760 mA/g
- the ratio of the discharging capacity ranging to 400 mV = 710/1760$\times$100 = 40.3%

Then, each of the cycle performance of the sample Nos. 1 to 6 was checked in the following procedure.

First, an electrode was produced in the same manner as the working electrode and used as the negative electrode.

Then, a positive electrode was produced under the following conditions by using lithium cobalt oxide as a positive electrode active material. First, 95% of lithium cobalt oxide, 1.5% of acetylene black, 1% of carbon nanotube, and 2.5% of polyvinylidene fluoride were mixed together with a dispersing agent of N-methylpyrrolidone to form a slurry. The slurry was applied to 15-$\mu$m-thickness aluminum foil. This sheet after the application was pre-dried at 85°C in the atmosphere for 10 minutes, and then pressed with a roller press. The resultant was dried under a vacuum at 130°C for 5 hours and finally die-cut into a positive electrode having an area of 2 cm$^2$.

A lithium-ion secondary battery for evaluation was produced by using thus obtained negative electrode and positive electrode, a non-aqueous electrolyte wherein 1 mole/L of lithium hexafluorophosphate dissolved in a mixed solution of ethylene carbonate and 1,2-dimethoxyethane with volume mixing ratio of 1:1, and a 30-$\mu$m-thickness separator made of a polyethylene microporous film.

The produced lithium-ion secondary battery was left at room temperature overnight, and then charged with a constant current of 2.5 mA until the voltage of the test cell reached 4.2 V by using a secondary battery charging and discharging tester (made by NAGANO K.K). After this voltage reached 4.2 V, the charging was continued while the current was decreased such that the voltage of the test cell kept 4.2 V. When the current was decreased to less than 0.5 mA, the charging was terminated. The battery was then discharged with a constant current of 2.5 mA. When the voltage exceeded 2.5V, the discharging was terminated to measure the discharging capacity. This charging and discharging test of the lithium-ion secondary battery for evaluation was repeated more than 20 cycles. The capacity maintenance rate greatly varies at the beginning of charge or discharge, but tends to stabilize after the charge and discharge are repeated about 20 times (see FIG. 2 showing a relationship between charge and discharge cycles and a discharging capacity maintenance rate). When a battery is used for an actual automobile, the battery characteristics after the stabilization is more important than those at the beginning of charge and discharge. Because the capacity maintenance rate stabilizes in the 20th cycle, the capacity maintenance rate in that cycle was calculated by the following formula and evaluated.

$$\text{Capacity maintenance rate in 20th cycle [\%] =}$$

$$\text{Discharging capacity in 21st cycle / Discharging capacity}$$

$$\text{in 20th cycle} \times 100$$

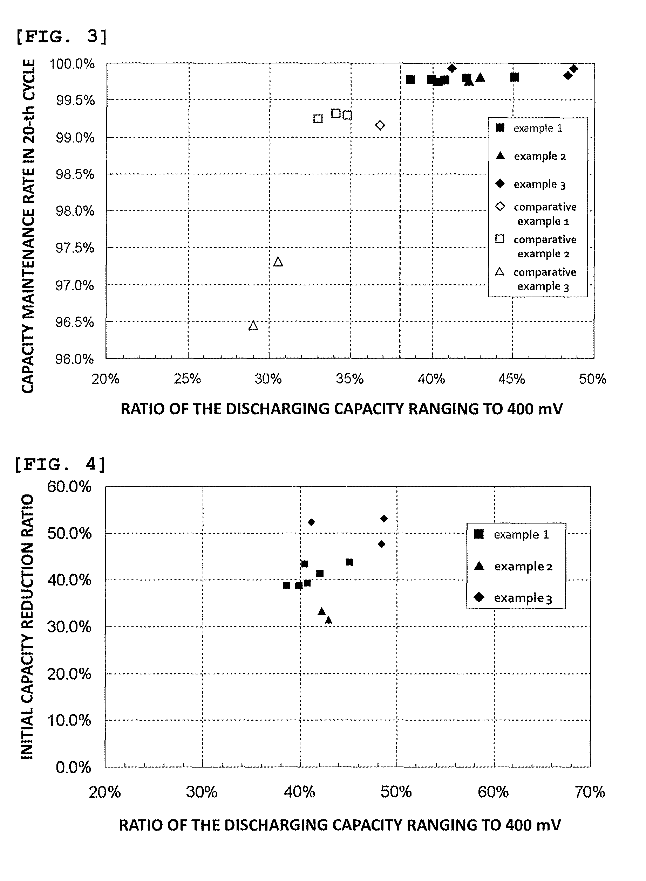

As shown in Table 1 below, it was found from the result that any sample Nos. 1 to 6 showed excellent values ranging from 99.7% to 99.8%. The values at each measurement point (the ratio of the discharging capacity ranging to 400 mV and a discharging capacity maintenance rate in the 20th cycle) were plotted in FIG. 3.

[Table 1]

| Sample No. | discharging capacity A (mA/g) | discharging capacity B (mA/g) | ratio of discharging capacity A/B (%) | capacity maintenance rate (20th cycle) (%) |
|---|---|---|---|---|
| 1 | 629 | 1627 | 38.7 | 99.8 |
| 2 | 676 | 1658 | 40.8 | 99.8 |
| 3 | 662 | 1572 | 42.1 | 99.8 |
| 4 | 681 | 1703 | 40.0 | 99.8 |
| 5 | 710 | 1760 | 40.3 | 99.7 |
| 6 | 786 | 1742 | 45.1 | 99.8 |

(Example 2)

The silicon-containing material in examples 1 was made of silicon oxide powder coated with carbon. Whether an advantageous effect (high cycle performance) of the present invention can be achieved was checked even when another element was added. In production of a battery, conductive silicon composite powder that was doped with lithium in advance was produced. Lithium may be used to improve the first-cycle efficiency. Specifically, the conductive silicon composite powder (sample No. 6) having the ratio of the discharging capacity ranging to 400 mV of 45.1% obtained in example 1 and 5% of metallic lithium were added to an organic solvent and the resultant was mixed. The mixture was then dried. This obtained conductive silicon composite powder doped with lithium was heated at a heating rate of 300°C/hour under an argon gas atmosphere and the temperature was maintained within the range from 500°C to 800°C for 3 to 8 hours. According to this method, composite powders of conductive silicon being doped with lithium (sample Nos. 7 and 8) were prepared.

[Battery evaluation]

The battery with each of the obtained conductive silicon composite powders was evaluated in the same manner as example 1 to calculate the capacity maintenance rate in the 20th cycle. As shown in Table 2 below, it was found from the result that the both showed an excellent value of 99.8%. The values at each measurement point were plotted in FIG. 3.

[Table 2]

| Sample No. | discharging capacity A (mA/g) | discharging capacity B (mA/g) | ratio of discharging capacity A/B(%) | capacity maintenance rate (20th cycle)(%) |
|---|---|---|---|---|
| 7 | 627 | 1484 | 42.2 | 99.8 |
| 8 | 644 | 1501 | 42.9 | 99.8 |

(Example 3)

After 200 g of silicon oxide powder ($SiO_x$: x=1.02) having an average particle size of 3 $\mu$m, and a BET specific surface area of 12 $m^2$/g was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while argon gas was introduced at a rate of 2 NL/min. The temperature was maintained within the range from 600°C to 1,000°C for 3 to 10 hours. After the maintenance, the temperature was decreased until the temperature reached room temperature. The powder was then taken out (sample Nos. 9 to 11).

[Battery evaluation]

The battery with the obtained conductive silicon composite powder was evaluated in the same manner as example 1 to calculate the capacity maintenance rate in the 20th cycle. As shown in Table 3 below, excellent values ranging from 99.8% to 99.9% were found from the result. The values at each measurement point were plotted in FIG. 3.

[Table 3]

| Sample No. | discharging capacity A (mA/g) | discharging capacity B (mA/g) | ratio of discharging capacity A/B (%) | capacity maintenance rate (20th cycle) (%) |
|---|---|---|---|---|
| 9 | 832 | 2020 | 41.2 | 99.9 |
| 10 | 937 | 1927 | 48.6 | 99.9 |
| 11 | 875 | 1809 | 48.4 | 99.8 |

(Comparative example 1)

After 200 g of silicon oxide powder ($SiO_x$: x=1.02) having an average particle size of 2 $\mu$m, and a BET specific surface area of 12 $m^2$/g was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while argon gas was introduced at a rate of 2 NL/min. The temperature was maintained at 1,250°C for 3 hours. After the maintenance, the temperature was decreased until the temperature reached room temperature. The powder was then taken out (sample No. 12). The average particle size remained 2 $\mu$m, and the contents of particles having a particle size of 0.5 $\mu$m or less did not change. Any sign of proceeding a formation of secondary particles was not found.

[Battery evaluation]

The battery with the obtained conductive silicon composite powder was evaluated in the same manner as example 1 to calculate the capacity maintenance rate in the 20th cycle. As shown in Table 4 below, it was found from the result that the value of the ratio of the discharging capacity ranging to 400 mV was 36.8%, and the capacity maintenance rate thereof was 99.2%. This value was about 0.5 lower than the values in examples 1 to 3. The value was plotted in FIG. 3.

[Table 4]

| Sample No. | discharging capacity A (mA/g) | discharging capacity B (mA/g) | ratio of discharging capacity A/B (%) | capacity maintenance rate (20th cycle) (%) |
|---|---|---|---|---|
| 12 | 646 | 1757 | 36.8 | 99.2 |

(Comparative example 2)

After 200 g of silicon oxide powder (SiO$_x$: x=1.02) which has an average particle size of 5 $\mu$m and contains 2% of particles having a particle size of 0.5 $\mu$m or less, and which has a BET specific surface area of 4 m$^2$/g was set on a silicon nitride tray, this powder was left in a furnace that can maintain the atmosphere. Then, argon gas was introduced into the furnace to replace the interior of the furnace with an argon atmosphere. The temperature in the furnace was increased at a heating rate of 300°C per hour while a mixed gas of methane and argon was introduced at a rate of 2 NL/min. The temperature was maintained at 1,250°C for 2 to 3 hours, so as to perform thermal chemical vapor deposition (CVD). After the maintenance, the temperature was decreased until the temperature reached room temperature. The powder was then taken out. According to this method, plural composite powder of conductive silicon (sample Nos. 13 to 15) were prepared. The deposited carbon amount of the obtained conductive silicon composite powder were 15.0% to 19%. The distribution of the grain sizes did not show large changes. Any signs of proceeding a formation of secondary particles were not found.

[Battery evaluation]

The battery with the obtained conductive silicon composite powder was evaluated in the same manner as example 1 to calculate the capacity maintenance rate in the 20th cycle. As shown in Table 5 below, it was found from the result that the values of the ratio of the discharging capacity ranging to 400 mV were 33.0% to 34.8%, and the capacity maintenance rates thereof were 99.2% to 99.3%. These values were about 0.5 lower than the values in examples 1 to 3. The values at each measuring point were plotted in FIG. 3.

[Table 5]

| Sample No. | discharging capacity A (mA/g) | discharging capacity B (mA/g) | ratio of discharging capacity A/B (%) | capacity maintenance rate (20th cycle) (%) |
|---|---|---|---|---|
| 13 | 497 | 1505 | 33.0 | 99.2 |
| 14 | 522 | 1500 | 34.8 | 99.3 |
| 15 | 554 | 1627 | 34.1 | 99.3 |

(Comparative example 3)

To the conductive silicon composite powder having the ratio of the discharging capacity ranging to 400 mV of 45.1%, which was obtained in example 1 (sample No. 6), 10% of metallic lithium was added in an organic solvent and the resultant was mixed. The mixture was then dried. This obtained conductive silicon composite powder doped with lithium was heated at a heating rate of 300°C/hour under an argon gas atmosphere and the temperature was maintained within the range from 400°C to 800°C for 2 to 12 hours. According to this method, composite powders of conductive silicon being doped with lithium (sample Nos. 16 and 17) were prepared.

Batteries with the obtained composite powders of conductive silicon being doped with lithium were evaluated.

[Battery evaluation]

The battery with the obtained conductive silicon composite powder was evaluated in the same manner as example 1 to calculate the capacity maintenance rate in the 20th cycle. As shown in Table 6 below, it was found from the result that the values of the ratio of the discharging capacity ranging to 400 mV were 29.0% to 30.5%, and the capacity maintenance rates thereof were 96.4% to 97.3%. These values were lower than the values in examples 1 to 3 by 2 points or more. The values at each measuring point were plotted in FIG. 3.

[Table 6]

| Sample No. | discharging capacity A (mA/g) | discharging capacity B (mA/g) | ratio of discharging capacity A/B (%) | capacity maintenance rate (20th cycle) (%) |
|---|---|---|---|---|
| 16 | 372 | 1284 | 29.0 | 96.4 |
| 17 | 421 | 1381 | 30.5 | 97.3 |

[Verification of effect by drawings]

FIG. 3 summarizes the result of the relationship between the ratio of the discharging capacity ranging to 400 mV and the capacity maintenance rate in the 20th cycle in examples 1 to 3 and comparative examples 1 to 3. In this FIG. 3, it can be clearly seen that when the value of the ratio of the discharging capacity ranging to 400 mV was 38% or more, the capacity maintenance rate was in an excellent range. This result indicates that a silicon-containing material for use in a non-aqueous electrolyte secondary battery having good cycle performance, an electrode and non-aqueous electrolyte secondary battery produced by using this material can be provided if the value of the ratio of the discharging capacity ranging to 400 mV is properly controlled.

Then, reductions in capacity that occurred within the period from the beginning to the 20th cycle of charge and discharge cycles (the degree of reduction of charging capacity in the 20th cycle compared to an initial charging capacity, represented by a ratio) were compared as initial capacity reduction rates (see FIG. 4). It is found that examples 1 and 2 exhibited a smaller initial capacity reduction rates than example 3 and provided a higher performance negative electrode material for use in a non-aqueous electrolyte secondary battery and a higher performance non-aqueous electrolyte secondary battery. It can be understood that example 1 achieved this effect by the carbon coating; example 2 by the combination of the carbon coating and lithium doping.

It is to be noted that the present invention is not limited to the foregoing embodiment. The embodiment is just an exemplification, and any examples that have substantially the same feature and demonstrate the same functions and effects as those in the technical concept described in claims of the present invention are included in the technical scope of the present invention.

**Claims**

1. A silicon-containing material capable of being doped with lithium and de-doped, wherein
   when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV.

2. The silicon-containing material according to claim 1, wherein the silicon-containing material is a silicon composite configured such that silicon fine crystals or silicon fine particles are dispersed in a substance having a different composition from a composition of the silicon fine crystals or the silicon fine particles.

3. The silicon-containing material according to claim 2, wherein the substance having the different composition from the composition of the silicon fine crystals or the silicon fine particles is a silicon-based compound.

4. The silicon-containing material according to any one of claims 1 to 3, wherein the silicon-containing material is a silicon oxide represented by a general formula of $SiO_x$ (where $0.9 \leq x < 1.6$) and a disproportionation product of the silicon oxide.

5. The silicon-containing material according to any one of claims 1 to 4, wherein a surface of the silicon-containing material is coated with a coating of a conductive material.

6. The silicon-containing material according to claim 5, wherein the coating of a conductive material is a coating mainly composed of carbon.

7. The silicon-containing material according to claim 5 or claim 6, wherein the silicon-containing material coated with a coating of a conductive material comprises secondary particles wherein particles of the silicon-containing material are mixed with the conductive material.

8. The silicon-containing material according to any one of claims 1 to 7, wherein the silicon-containing material further comprising lithium.

9. A negative electrode for use in a non-aqueous electrolyte secondary battery, comprising a silicon-containing material according to any one of claims 1 to 8 as a negative electrode active material.

10. A negative electrode for use in a non-aqueous electrolyte secondary battery, comprising a silicon-containing material according to any one of claims 1 to 8 and carbon as a negative electrode active material.

11. A non-aqueous electrolyte secondary battery, comprising a negative electrode and a positive electrode that are capable of occluding and emitting lithium ions and an electrolyte having lithium ionic conductivity, wherein the negative electrode is a negative electrode for use in a non-aqueous electrolyte secondary battery according to claim 9 or claim 10.

12. A method of producing a negative electrode for use in a non-aqueous electrolyte secondary battery by using a silicon-containing material capable of being doped with lithium and de-doped as a negative electrode active material, comprising the steps of:

selecting the silicon-containing material such that when a three-electrode cell produced by using a working electrode including the silicon-containing material as an active material, a reference electrode made of metallic lithium, a counter electrode made of metallic lithium, and an electrolyte having lithium ionic conductivity is charged and discharged to measure a relationship between a charging or discharging capacity and a potential of the working electrode on the basis of the reference electrode, a ratio of a first capacity to a second capacity is 38% or more while current flows in a direction in which the lithium of the silicon-containing material is de-doped in the discharge, where the first capacity is the discharging capacity with respect to a potential range from a potential in a fully charged state to 400 mV, and the second capacity is the discharging capacity with respect to a potential range from a potential in a fully charged state to 2000 mV; and
producing the negative electrode for use in a non-aqueous electrolyte secondary battery by using the selected silicon-containing material as the negative electrode active material.

13. A method of producing a non-aqueous electrolyte secondary battery including a negative electrode and a positive electrode that are capable of occluding and emitting lithium ions and an electrolyte having lithium ionic conductivity, wherein the negative electrode is a negative electrode produced by the method according to claim 12.

[FIG. 1]

discharging capacity ranging to 2000 mV: B

discharging capacity ranging to 400 mV: A

[FIG. 2]

[FIG. 3]

[FIG. 4]

## INTERNATIONAL SEARCH REPORT

| | International application No. |
|---|---|
| | PCT/JP2014/004681 |

**A. CLASSIFICATION OF SUBJECT MATTER**
*H01M4/48*(2010.01)i, *H01M4/36*(2006.01)i, *H01M4/38*(2006.01)i

According to International Patent Classification (IPC) or to both national classification and IPC

**B. FIELDS SEARCHED**

Minimum documentation searched (classification system followed by classification symbols)
H01M4/48, H01M4/36, H01M4/38

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-190978 A (Sanyo Electric Co., Ltd.), 14 July 2005 (14.07.2005), paragraphs [0066] to [0073]; fig. 6 & US 2004/0191629 A1 & KR 10-2004-0084858 A & CN 1534822 A | 1,9,11 |
| X Y A | JP 2004-323284 A (Shin-Etsu Chemical Co., Ltd.), 18 November 2004 (18.11.2004), paragraphs [0001], [0023] to [0025] (Family: none) | 1-4,9-11 8 5-7,12,13 |
| X Y | JP 2004-327190 A (Shin-Etsu Chemical Co., Ltd.), 18 November 2004 (18.11.2004), paragraphs [0001], [0014], [0041] to [0043] (Family: none) | 1-7,9-11 8 |

[×] Further documents are listed in the continuation of Box C.   [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 December, 2014 (09.12.14) | 22 December, 2014 (22.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/004681 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-212074 A  (Shin-Etsu Chemical Co.,<br>Ltd.),<br>17 September 2009 (17.09.2009),<br>paragraphs [0001], [0016], [0039] to [0041]<br>& US 2009/0202911 A1     & EP 2088221 A1<br>& CN 101504980 A          & KR 10-2009-0086320 A | 1-7,9,11<br>8 |
| Y | JP 2007-294423 A  (Shin-Etsu Chemical Co.,<br>Ltd.),<br>08 November 2007 (08.11.2007),<br>paragraphs [0001], [0009]<br>& US 2007/0224508 A1     & CN 101047234 A<br>& KR 10-2007-0096933 A  & TW 00I392133 B | 8 |
| P,X | WO 2013/168727 A1  (KRI Inc.),<br>14 November 2013 (14.11.2013),<br>paragraphs [0043], [0055] to [0061]; fig. 1<br>(Family: none) | 1-9,11 |

Form PCT/ISA/210 (continuation of second sheet) (July 2009)

**EP 3 054 505 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05174818 B
- JP H0660867 B
- JP H10294112 B
- JP 2997741 B
- JP H11102705 B
- JP 3952180 B
- JP 4081676 B